(19) Europäisches Patentamt / European Patent Office / Office européen des brevets

(11) **EP 3 059 571 B1**

(12) **EUROPEAN PATENT SPECIFICATION**

(45) Date of publication and mention
of the grant of the patent:
**11.05.2022   Bulletin 2022/19**

(21) Application number: **16466003.7**

(22) Date of filing: **18.02.2016**

(51) International Patent Classification (IPC):
*G01L 5/162* (2020.01)        *G01M 17/10* (2006.01)
*B61K 9/12* (2006.01)          *G01L 1/22* (2006.01)
*G01L 5/13* (2006.01)          *G01L 5/16* (2020.01)
*G01L 25/00* (2006.01)

(52) Cooperative Patent Classification (CPC):
**G01L 5/162; B61K 9/12; G01L 1/2231; G01L 5/13; G01L 25/00; G01M 17/10**

(54) **SYSTEM OF MEASURING THE FORCE EFFECT IN CONTACT BETWEEN THE WHEEL OF THE RAILWAY ROLLING STOCK AND THE RAIL AND ITS CALIBRATION METHOD**

SYSTEM ZUR MESSUNG DER KRAFTEINWIRKUNG AM KONTAKT ZWISCHEN DEM RAD EINES SCHIENENFAHRZEUGS UND DER SCHIENE UND SEINE KALIBRIERUNGSVERFAHREN

SYSTÈME DE MESURE DE L'EFFET DE LA FORCE DE CONTACT ENTRE LA ROUE DU MATÉRIEL ROULANT FERROVIAIRE ET LE RAIL ET SON PROCÉDÉ ET CADRE D'ÉTALONNAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2015   CZ 20150112**

(43) Date of publication of application:
**24.08.2016   Bulletin 2016/34**

(60) Divisional application:
**22020140.4**

(73) Proprietor: **VÚKV a.s.**
**158 00 Praha 5 (CZ)**

(72) Inventors:
• **Capek, Jan**
  **19800 Praha 9 (CZ)**
• **Bauer, Petr**
  **17000 Praha 7 (CZ)**
• **Culek, Bohumil**
  **53352 Stare Hradiste u Pardubic (CZ)**
• **Strnad, Ota**
  **16000 Praha 6 (CZ)**
• **Malinský, Jirí**
  **140 00 Prague 4 (CZ)**

(74) Representative: **Loskotová, Jarmila**
**K Závetinám 727**
**155 00 Praha 5 (CZ)**

(56) References cited:
EP-A1- 2 457 800        EP-A2- 1 978 345
EP-A2- 2 180 303        EP-B1- 1 886 110
DE-A1-102004 021 488    US-A- 4 800 748
US-A1- 2005 103 100     US-A1- 2012 042 720

• **Dragan Petrovic ET AL: "MEASURING SYSTEMS FOR TESTING THE SAFETY AND SECURITY OF RAILWAY VEHICLES", , 1 January 2011 (2011-01-01), pages 20-28, XP055314155, Retrieved from the Internet: URL:http://www.mtc-aj.com/conf_2011/dok_57 7.pdf [retrieved on 2016-10-26]**
• **Giorgio Diana ET AL: "Challenge E: Bringing the territories closer together at higher speeds DESIGN OF A NEW FULL SCALE TEST-RIG FOR THE CALIBRATION OF INSTRUMENTED WHEELSETS", , 26 May 2008 (2008-05-26), XP055314236, Retrieved from the Internet: URL:http://www.railway-research.org/IMG/pd f/e4_di_gialleonardo_egidio.pdf [retrieved on 2016-10-26]**

## Description

### Field of technology

The current invention relates to a wheel or wheelset for measuring the force effect in contact between said wheel or wheelset of a railway rolling stock and the rail, especially the tangential forces, and a method of calibrating the wheel or wheelset. The wheel or wheelset is defined in appended claim 1 and the method of calibration in appended claim 2.

### The prior art

The force effect between the wheel of a moving railway rolling stock and the rail are detected based on the measured deformations of the rolling stock's wheel. Known solutions are described in patents EP 2 246 681 A2, EP 2 439 508 A, CZ EP 1 886 110, EP 2 180 303. These solutions differ above all in the number of detected components of force action between the wheel of the rolling stock and the rail ($FQ$ - vertical forces, $FY$ - transverse forces, $FT$ - longitudinal tangential forces, eventually $L$ - position of the contact point between the wheel and the rail on the wheel profile in transverse direction) by the way of placing the deformation sensors - strain gauges - onto the wheel of the railway rolling stock, the so-called measuring wheel, and employment of strain gauges in the system.

Position of the contact point L - the position of the contact point between the wheel and the rail on the wheel profile in the transverse direction is onwards to be referred to as transverse position of contact point L.

The wheel of the railway rolling stock in the system for measuring the force effect in contact between the wheel of the rolling stock and the rail is to be referred to as the measuring wheel. In case of railway rolling stocks the wheels are connected by a rigid axle into a so-called wheelset. In practice, the term measuring wheelset is often found. Solutions according to the above mentioned patents CZ EP 1 886 110 and EP 2 181 303 do not involve mechanical processing of the measuring wheel or wheelset, since the strain gauges are placed only on one side of the measuring wheel's disc. In case the strain gauges are placed on both sides of the wheel it is necessary to make a hole in the wheel in order to connect the strain gauges electrically. From the two mentioned solutions only the solution of the CZ EP 1 886 110 patent facilitates measuring of all components of the force action, $FQ$ - vertical forces, $FY$ - transverse forces, $FT$ - longitudinal tangential forces . Within the solution of the CZ PV 2008-657 patent it is impossible to measure the tangential force $FT$.

Patent document EP 2 457 800 A1 proposes a solution that is optimised for measuring the tangential forces arising in railway wheels or wheelsets in which the measuring strain gauges are located in boreholes, that act as stress concentration centres; that need to be drilled in the wheel.

The wheel is therefore damaged for further use. This solution does not allow you to measure the tangential forces of FT with the necessary precision. Patent document EP 1 886 110 A1 also discloses a method and system for determining a plurality of load components on a wheel or wheelset. Multiple complete Wheatstone bridges are mounted to one side of the train wheel on one pitch circle. Each Wheatstone bridge comprises gauges mounted so that their strain sensitive axis is aligned in the radial direction and also gauges that are orientated in a direction perpendicular to the radial direction. This patent focuses on the determination of vertical and lateral forces acting on the wheel, but also indicates that other forces / loads may be determined. It does not provide a specific embodiment for how the strain gauges should be optimized for determining tangential forces.

Known solutions, including the solution of the CZ EP 1 886 110 patent, which incorporate the measurement of all loading components $FQ, FY, FT$ are according to the patents' texts designed with respect to achieving high detection accuracy of $FQ$ and $FY$. All in all, that leads to the tangential force being detected without adequate accuracy. This claim is proved right by the fact that all strain gauges measuring the wheel's deformation are in all solutions placed on the measuring wheel in radial or tangential direction. Such position of the strain gauges enables them to measure the forces $FQ$ and $FY$ with adequate accuracy, but not the force $FT$-see the paragraph examples of the invention's realization.

Due to focusing on measuring the acting forces $FQ$ and $FY,$ the known solutions are considerably complicated what regards to assembling the measuring system as well as evaluating the measured deformations of the measuring wheel. This also leads to bigger costs of these solutions.

In the rolling stocks field, there is a requirement for measuring the tangential forces $FT$ with high accuracy, for example when testing or debugging the stocks' drives.

So that it would be possible to analyze the measured deformations of the measuring wheel in order to evaluate the impact of the forces action between the wheel of the railway rolling stock and the rail it is necessary to calibrate the system first, i.e. load the measuring wheel by a known load and from the known loading and the corresponding measured deformations derive the so-called calibration constants which are present in the calculation of forces based on the measured deformations of the wheel of a moving railway rolling stock. This process is to be onwards referred to as calibration. A calibration method is crucial for the resulting accuracy of the force effects measurement.

In the current technology background predominantly static calibration is carried out consisting of a stationary measuring wheel being loaded by simple agents of various load values in several chosen positions on the circumference of the measuring wheel. This method is very work- and time consuming because between each loading it is necessary to move the loading supports or turn the measuring wheel into the proper position which consequently leads to a limited number of loads.

Dragan Petrovic et al., "Measuring system for the safety and safety of railway vehicles", published in 2011, discloses a test stand for calibration and testing of instrumented wheelsets, in which the main purpose of the test stand is the calibration and testing of instrumented wheelsets of railway vehicles in quasi-static and dynamic operating modes.

Another disadvantage of static loading is the difference of such loading from reality of a rolling wheel being loaded during the ride down the rail.

The loading's difference from reality of a stock rolling down the rail and the limited number of loadings on the circumference of the wheel which provide data for evaluating the calibration constants are factors which negatively influence the resulting accuracy of measuring of force effects between the wheel and the rail in case of a moving railway rolling stock.

The nature of invention

The above mentioned disadvantages are removed by a wheel or wheelset according to appended claim 1 and by a method of calibration according to claim 2.

The measuring components are standard wheels (wheel set) of a railway rolling stock, so-called measuring wheels (wheelset) without the necessity of their irreversible mechanical damage. The measuring system is based on the solution of CZ PV 2008 - 657 patent which is capable of measuring the vertical wheel forces $FQ$, transverse wheel-guiding force $FY$ and the contact point position $L$. The measuring system is capable of measuring also only the tangential force $FT$. By suitable arrangement of strain gauges' system it is possible to measure only the tangential force $FT$ which not only makes the system's production easier and cheaper, but above all enables us to measure the force very accurately. In the rolling stocks' field there is a requirement for measuring the tangential forces $FT$ with high accuracy, for example when testing or debugging the stocks' drives.

If deformations of the disc of the railway rolling stock's wheel are within the applicability of the Hooke's law, then there is a clear dependence between the acting forces - vertical wheel force $FQ$, transverse wheel-guiding force $FY$ and longitudinal tangential force $FT$ - and the tension $\sigma$ in the wheel's disc. The tensions are detected with the help of strain gauges measuring the induced deformations on the surface of the wheel's disc. The dependence between the tension $\sigma$ and the force action can be described by the equation:

$$\sigma = FQ \cdot (a \cdot L + b) + FY \cdot (c \cdot L + d) + FT \cdot (j \cdot L + k) \tag{1}$$

where $L$ is the transverse position of the contact point between wheel and rail and $a$, $b$, $c$, $d$, $j$, k, are constants. In this equation there are four unknown quantities ($FQ$, $FY$, $FT$, $L$). Constants' values are determined during calibration. So this is a nonlinear equation with 4 unknowns.

But this equation can also be considered a linear equation with 6 unknowns ($FQ$, $FY$, $FT$, $FQ \cdot L$, $FY \cdot L$, $FT \cdot L$) which is used in the practical solution.

In order to identify the six unknowns it is necessary to create a system of six equations:

$$\sigma_1 = FQ \cdot (a_1 \cdot L + b_1) + FY \cdot (c_1 \cdot L + d_1) + FT \cdot (j_1 \cdot L + k_1)$$
$$\sigma_2 = FQ \cdot (a_2 \cdot L + b_2) + FY \cdot (c_2 \cdot L + d_2) + FT \cdot (j_2 \cdot L + k_2) \tag{2}$$
$$\sigma_6 = FQ \cdot (a_6 \cdot L + b_6) + FY \cdot (c_6 \cdot L + d_6) + FT \cdot (j_6 \cdot L + k_6)$$

or upon multiplying them out:

$$\sigma_1 = a_1 \cdot FQ \cdot L + b_1 \cdot FQ + c_1 \cdot FY \cdot L + d_1 \cdot FY + j_1 \cdot FT \cdot L + k_1 \cdot FT$$
$$\sigma_2 = a_2 \cdot FQ \cdot L + b_2 \cdot FQ + c_2 \cdot FY \cdot L + d_2 \cdot FY + j_2 \cdot FT \cdot L + k_2 \cdot FT \tag{3}$$
$$\sigma_6 = a_6 \cdot FQ \cdot L + b_6 \cdot FQ + c_6 \cdot FY \cdot L + d_6 \cdot FY + j_6 \cdot FT \cdot L + k_6 \cdot FT$$

The tensions $\sigma_1$ to $\sigma_6$ are tensions detected on six various places of the wheel's disc induced by loading forces *FQ, FY, FT* in the position *L*. The system of linear equations (3) can be rewritten as a matrix form:

$$
\begin{bmatrix} \sigma_1 \\ \sigma_2 \\ \sigma_3 \\ \sigma_4 \\ \sigma_5 \\ \sigma_6 \end{bmatrix} = \begin{bmatrix} a_1 & b_1 & c_1 & d_1 & j_1 & k_1 \\ a_2 & b_2 & c_2 & d_2 & j_2 & k_2 \\ a_3 & b_3 & c_3 & d_3 & j_3 & k_3 \\ a_4 & b_4 & c_4 & d_4 & j_4 & k_4 \\ a_5 & b_5 & c_5 & d_5 & j_5 & k_5 \\ a_6 & b_6 & c_6 & d_6 & j_6 & k_6 \end{bmatrix} \cdot \begin{bmatrix} FQ \cdot L \\ FQ \\ FY \cdot L \\ FY \\ FT \cdot L \\ FT \end{bmatrix} \tag{4}
$$

or:

$$
\boldsymbol{\sigma} = \mathbf{A} \cdot \mathbf{F} \tag{5}
$$

The matrix form of the equation (5) solves the load vector F in the following way:

$$
\mathbf{F} = \mathbf{A}^{-1} \cdot \boldsymbol{\sigma} \tag{6}
$$

or:

$$
\begin{bmatrix} FQ \cdot L \\ FQ \\ FY \cdot L \\ FY \\ FT \cdot L \\ FT \end{bmatrix} = \begin{bmatrix} C_{QL1} & C_{QL2} & C_{QL3} & C_{QL4} & C_{QL5} & C_{QL6} \\ C_{Q1} & C_{Q2} & C_{Q3} & C_{Q4} & C_{Q5} & C_{Q6} \\ C_{YL1} & C_{YL2} & C_{YL3} & C_{YL4} & C_{YL5} & C_{YL6} \\ C_{Y1} & C_{Y2} & C_{Y3} & C_{Y4} & C_{Y5} & C_{Y6} \\ C_{TL1} & C_{TL2} & C_{TL3} & C_{TL4} & C_{TL5} & C_{TL6} \\ C_{T1} & C_{T2} & C_{T3} & C_{T4} & C_{T5} & C_{T6} \end{bmatrix} \cdot \begin{bmatrix} \sigma_1 \\ \sigma_2 \\ \sigma_3 \\ \sigma_4 \\ \sigma_5 \\ \sigma_6 \end{bmatrix} \tag{7}
$$

The constants $C_{Qn}$, $C_{Yn}$, $C_{Tn}$, $C_{QLn}$, $C_{YLn}$, $C_{TLn}$ are functions of constants $a_n$, $b_n$, $c_n$, $d_n$, $j_n$, $k_n$. After multiplying them out, we get a solution of the equation system (3) in the following form:

$$
FQ \cdot L = C_{QL1} \cdot \sigma_1 + C_{QL2} \cdot \sigma_2 + C_{QL3} \cdot \sigma_3 + C_{QL4} \cdot \sigma_4 + C_{QL5} \cdot \sigma_5 + C_{QL6} \cdot \sigma_6
$$

$$
FQ = C_{Q1} \cdot \sigma_1 + C_{Q2} \cdot \sigma_2 + C_{Q3} \cdot \sigma_3 + C_{Q4} \cdot \sigma_4 + C_{Q5} \cdot \sigma_5 + C_{Q6} \cdot \sigma_6
$$

$$
FY \cdot L = C_{YL1} \cdot \sigma_1 + C_{YL2} \cdot \sigma_2 + C_{YL3} \cdot \sigma_3 + C_{YL4} \cdot \sigma_4 + C_{YL5} \cdot \sigma_5 + C_{YL6} \cdot \sigma_6
$$

$$
FY = C_{Y1} \cdot \sigma_1 + C_{Y2} \cdot \sigma_2 + C_{Y3} \cdot \sigma_3 + C_{Y4} \cdot \sigma_4 + C_{Y5} \cdot \sigma_5 + C_{Y6} \cdot \sigma_6 \tag{8}
$$

$$
FT \cdot L = C_{TL1} \cdot \sigma_1 + C_{TL2} \cdot \sigma_2 + C_{TL3} \cdot \sigma_3 + C_{TL4} \cdot \sigma_4 + C_{TL5} \cdot \sigma_5 + C_{TL6} \cdot \sigma_6
$$

$$
FT = C_{T1} \cdot \sigma_1 + C_{T2} \cdot \sigma_2 + C_{T3} \cdot \sigma_3 + C_{T4} \cdot \sigma_4 + C_{T5} \cdot \sigma_5 + C_{T6} \cdot \sigma_6
$$

Knowing the constants $C_{Qn}$, $C_{Yn}$, $C_{Tn}$, $C_{QLn}$, $C_{YLn}$, $C_{TLn}$ and known (measured) values of tension $\sigma_n$, it is possible to find out from the equations (8) the values of acting forces *FQ, FY, FT* and the position of these forces *L*.

The constants $C_{Qn}$, $C_{Yn}$, $C_{Tn}$, $C_{QLn}$, $C_{YLn}$, $C_{TLN}$ are established within calibration of the measuring wheelset.

Symbols *FQ, FY, FT, L* mark the real load forces and the transverse position of the force's origin, symbols *Q, Y, T, X* mark the established forces and their positions (the forces detected by the measuring system). The equations (8) are valid not only for mechanical tensions $\sigma$ but also for voltages on the strain gauges. Since these equations are linear they are also valid for tensions and voltages which emerge by their free linear combination, therefore also for the voltage on all strain bridges *B* [mV/V] which the strain gauges are connected to.

The equations (8) are thus filled with voltages of bridges $B$. These equations can then be used with the knowledge of calibration constants $C_{QB}$, $C_{YB}$, $C_{TB}$, $C_{QLB}$, $C_{YLB}$, $C_{TLB}$ for calculating the forces $Q$, $Y$, $T$ (and the position of the contact point $X$):

$$Q = C_{QB,1} \cdot B_1 + C_{QB,2} \cdot B_2 + C_{QB,3} \cdot B_3 + C_{QB,4} \cdot B_4 + C_{QB,5} \cdot B_5 + C_{QB,6} \cdot B_6$$

$$Y = C_{YB,1} \cdot B_1 + C_{YB,2} \cdot B_2 + C_{YB,3} \cdot B_3 + C_{YB,4} \cdot B_4 + C_{YB,5} \cdot B_5 + C_{YB,6} \cdot B_6$$

$$T = C_{TB,1} \cdot B_1 + C_{TB,2} \cdot B_2 + C_{TB,3} \cdot B_3 + C_{TB,4} \cdot B_4 + C_{TB,5} \cdot B_5 + C_{TB,6} \cdot B_6$$

$$Q \cdot X = C_{QLB,1} \cdot B_1 + C_{QLB,2} \cdot B_2 + C_{QLB,3} \cdot B_3 + C_{QLB,4} \cdot B_4 + C_{QLB,5} \cdot B_5 + C_{QLB,6} \cdot B_6$$

$$Y \cdot X = C_{YLB,1} \cdot B_1 + C_{YLB,2} \cdot B_2 + C_{YLB,3} \cdot B_3 + C_{YLB,4} \cdot B_4 + C_{YLB,5} \cdot B_5 + C_{YLB,6} \cdot B_6$$

$$T \cdot X = C_{TLB,1} \cdot B_1 + C_{TLB,2} \cdot B_2 + C_{TLB,3} \cdot B_3 + C_{TLB,4} \cdot B_4 + C_{TLB,5} \cdot B_5 + C_{TLB,6} \cdot B_6$$

$$(9)$$

In theory, the solutions $Q$, $Y$, $T$ and $X$ are equal to load forces $FQ$, $FY$, $FT$ and the position of the contact point $L$ only in case that the wheel is in the same position as was used for establishing the constants $C_{QB}$, $C_{YB}$, $C_{TB}$, $C_{QLB}$, $C_{YLB}$, $C_{TLB}$ - in the position in which the calibration was carried out. By the wheel's position is understood rotating position around the rotation axis.

The calibration's goal is establishing the calibration constants $C_{QB,i}$, $C_{YB,i}$, $C_{TB,i}$, $C_{QLB,i}$, $C_{YLB,i}$, $C_{TLB,i}$, i = 1 ÷ 6 present in the equations (9) for calculations of $Q$, $Y$, $T$ and $X$. The calibration can be carried out in general for any position of the wheel. For each position, the calibration establishes the constants $C_{QB,i}$, $C_{YB,i}$, $C_{TB,i}$, $C_{QLB,i}$, $C_{YLB,i}$, $C_{TLB,i}$. The equations (9) are used for calculation of the calibration constants.

For establishing the calibration constants it is necessary to load the wheel in the position in which the calibration is carried out in general by at least 6 various loads $[FQ_j, FY_j, FT_j, L_j]$, j = 1 ÷ min. 6. For one calibration position of the wheel we get in case of 6 various loads 6 systems of 6 equations:

$$FQ_1 = C_{QB,1} \cdot B_{1,1} + C_{QB,2} \cdot B_{1,2} + C_{QB,3} \cdot B_{1,3} + C_{QB,4} \cdot B_{1,4} + C_{QB,5} \cdot B_{1,5} + C_{QB,6} \cdot B_{1,6}$$

$$FQ_2 = C_{QB,1} \cdot B_{2,1} + C_{QB,2} \cdot B_{2,2} + C_{QB,3} \cdot B_{2,3} + C_{QB,4} \cdot B_{2,4} + C_{QB,5} \cdot B_{2,5} + C_{QB,6} \cdot B_{2,6}$$

$$...$$

$$FQ_6 = C_{QB,1} \cdot B_{6,1} + C_{QB,2} \cdot B_{6,2} + C_{QB,3} \cdot B_{6,3} + C_{QB,4} \cdot B_{6,4} + C_{QB,5} \cdot B_{6,5} + C_{QB,6} \cdot B_{6,6}$$

$$(10)$$

$$FY_1 = C_{YB,1} \cdot B_{1,1} + C_{YB,2} \cdot B_{1,2} + C_{YB,3} \cdot B_{1,3} + C_{YB,4} \cdot B_{1,4} + C_{YB,5} \cdot B_{1,5} + C_{YB,6} \cdot B_{1,6}$$

$$FY_2 = C_{YB,1} \cdot B_{2,1} + C_{YB,2} \cdot B_{2,2} + C_{YB,3} \cdot B_{2,3} + C_{YB,4} \cdot B_{2,4} + C_{YB,5} \cdot B_{2,5} + C_{YB,6} \cdot B_{2,6}$$

$$...$$

$$FY_6 = C_{YB,1} \cdot B_{6,1} + C_{YB,2} \cdot B_{6,2} + C_{YB,3} \cdot B_{6,3} + C_{YB,4} \cdot B_{6,4} + C_{YB,5} \cdot B_{6,5} + C_{YB,6} \cdot B_{6,6}$$

$$(11)$$

$$FT_1 = C_{TB,1} \cdot B_{1,1} + C_{TB,2} \cdot B_{1,2} + C_{TB,3} \cdot B_{1,3} + C_{TB,4} \cdot B_{1,4} + C_{TB,5} \cdot B_{1,5} + C_{TB,6} \cdot B_{1,6}$$

$$FT_2 = C_{TB,1} \cdot B_{2,1} + C_{TB,2} \cdot B_{2,2} + C_{TB,3} \cdot B_{2,3} + C_{TB,4} \cdot B_{2,4} + C_{TB,5} \cdot B_{2,5} + C_{TB,6} \cdot B_{2,6}$$

$$...$$

$$FT_6 = C_{TB,1} \cdot B_{6,1} + C_{TB,2} \cdot B_{6,2} + C_{TB,3} \cdot B_{6,3} + C_{TB,4} \cdot B_{6,4} + C_{TB,5} \cdot B_{6,5} + C_{TB,6} \cdot B_{6,6}$$

$$(12)$$

$$FQ_1 \cdot L_1 = C_{QLB,1} \cdot B_{1,1} + C_{QLB,2} \cdot B_{1,2} + C_{QLB,3} \cdot B_{1,3} + C_{QLB,4} \cdot B_{1,4} + C_{QLB,5} \cdot B_{1,5} + C_{QLB,6} \cdot B_{1,6}$$

$$FQ_2 \cdot L_2 = C_{QLB,1} \cdot B_{2,1} + C_{QLB,2} \cdot B_{2,2} + C_{QLB,3} \cdot B_{2,3} + C_{QLB,4} \cdot B_{2,4} + C_{QLB,5} \cdot B_{2,5} + C_{QLB,6} \cdot B_{2,6}$$

$$\dots$$

$$FQ_6 \cdot L_6 = C_{QLB,1} \cdot B_{6,1} + C_{QLB,2} \cdot B_{6,2} + C_{QLB,3} \cdot B_{6,3} + C_{QLB,4} \cdot B_{6,4} + C_{QLB,5} \cdot B_{6,5} + C_{QLB,6} \cdot B_{6,6} \tag{13}$$

$$FY_1 \cdot L_1 = C_{YLB,1} \cdot B_{1,1} + C_{YLB,2} \cdot B_{1,2} + C_{YLB,3} \cdot B_{1,3} + C_{YLB,4} \cdot B_{1,4} + C_{YLB,5} \cdot B_{1,5} + C_{YLB,6} \cdot B_{1,6}$$

$$FY_2 \cdot L_2 = C_{YLB,1} \cdot B_{2,1} + C_{YLB,2} \cdot B_{2,2} + C_{YLB,3} \cdot B_{2,3} + C_{YLB,4} \cdot B_{2,4} + C_{YLB,5} \cdot B_{2,5} + C_{YLB,6} \cdot B_{2,6}$$

$$\dots$$

$$FY_6 \cdot L_6 = C_{YLB,1} \cdot B_{6,1} + C_{YLB,2} \cdot B_{6,2} + C_{YLB,3} \cdot B_{6,3} + C_{YLB,4} \cdot B_{6,4} + C_{YLB,5} \cdot B_{6,5} + C_{YLB,6} \cdot B_{6,6} \tag{14}$$

$$FT_1 \cdot L_1 = C_{TLB,1} \cdot B_{1,1} + C_{TLB,2} \cdot B_{1,2} + C_{TLB,3} \cdot B_{1,3} + C_{TLB,4} \cdot B_{1,4} + C_{TLB,5} \cdot B_{1,5} + C_{TLB,6} \cdot B_{1,6}$$

$$FT_2 \cdot L_2 = C_{TLB,1} \cdot B_{2,1} + C_{TLB,2} \cdot B_{2,2} + C_{TLB,3} \cdot B_{2,3} + C_{TLB,4} \cdot B_{2,4} + C_{TLB,5} \cdot B_{2,5} + C_{TLB,6} \cdot B_{2,6}$$

$$\dots$$

$$FT_6 \cdot L_6 = C_{TLB,1} \cdot B_{6,1} + C_{TLB,2} \cdot B_{6,2} + C_{TLB,3} \cdot B_{6,3} + C_{TLB,4} \cdot B_{6,4} + C_{TLB,5} \cdot B_{6,5} + C_{TLB,6} \cdot B_{6,6} \tag{15}$$

The solutions of these systems (10) to (15) are calibration constants $C_{QB,i}$, $C_{YB,i}$, $C_{TB,i}$, $C_{QLB,i}$, $C_{YLB,i}$, $C_{TLB,i}$ pertaining to one position of the wheel. Thus the calibration constants for all calibration positions are established.

Therefore it is apparent that measuring of the forces $FQ$, $FY$ and $FT$ is possible without the necessity of knowing the transverse position of the contact point $L$ between the wheel and the rail. With the use of the systems (10), (11) and (12) it is possible to determine only the calibration constants $C_{QB,i}$, $C_{YB,i}$, $C_{TB,i}$, $C_{QLB,i}$, $C_{YLB,i}$, $C_{TLB,i}$ pertaining to these forces.

During static calibration a stationary, non-rotating wheel is statically loaded in each calibrated position in general by 6 various loads $[FQ_j, FJ_j, FT_j, L_j], j = 1 \div 6$. Thus we get systems of 6 equations (10) to (15). Solutions of these systems are calibration constants $C_{QB,i}$, $C_{YB,i}$, $C_{TB,i}$, $C_{QLB,i}$, $C_{YLB,i}$, $C_{TLB,i}$.

Dynamic calibration is carried out when the wheelset is rotating. Calibration coefficient are then established based on a big amount of measured data, not only based on 6 static loadings (for each calibrated position of the wheel). Thus we get the system of more equations than the number of unknowns:

$$FQ_1 = C_{QB,1} \cdot B_{1,1} + C_{QB,2} \cdot B_{1,2} + C_{QB,3} \cdot B_{1,3} + C_{QB,4} \cdot B_{1,4} + C_{QB,5} \cdot B_{1,5} + C_{QB,6} \cdot B_{1,6}$$

$$FQ_2 = C_{QB,1} \cdot B_{2,1} + C_{QB,2} \cdot B_{2,2} + C_{QB,3} \cdot B_{2,3} + C_{QB,4} \cdot B_{2,4} + C_{QB,5} \cdot B_{2,5} + C_{QB,6} \cdot B_{2,6}$$

$$\dots$$

$$FQ_k = C_{QB,1} \cdot B_{k,1} + C_{QB,2} \cdot B_{k,2} + C_{QB,3} \cdot B_{k,3} + C_{QB,4} \cdot B_{k,4} + C_{QB,5} \cdot B_{k,5} + C_{QB,6} \cdot B_{k,6} \tag{16}$$

$$FY_1 = C_{YB,1} \cdot B_{1,1} + C_{YB,2} \cdot B_{1,2} + C_{YB,3} \cdot B_{1,3} + C_{YB,4} \cdot B_{1,4} + C_{YB,5} \cdot B_{1,5} + C_{YB,6} \cdot B_{1,6}$$

$$FY_2 = C_{YB,1} \cdot B_{2,1} + C_{YB,2} \cdot B_{2,2} + C_{YB,3} \cdot B_{2,3} + C_{YB,4} \cdot B_{2,4} + C_{YB,5} \cdot B_{2,5} + C_{YB,6} \cdot B_{2,6}$$

$$\dots$$

$$FY_k = C_{YB,1} \cdot B_{k,1} + C_{YB,2} \cdot B_{k,2} + C_{YB,3} \cdot B_{k,3} + C_{YB,4} \cdot B_{k,4} + C_{YB,5} \cdot B_{k,5} + C_{YB,6} \cdot B_{k,6} \tag{17}$$

$$FT_1 = C_{TB,1} \cdot B_{1,1} + C_{TB,2} \cdot B_{1,2} + C_{TB,3} \cdot B_{1,3} + C_{TB,4} \cdot B_{1,4} + C_{TB,5} \cdot B_{1,5} + C_{TB,6} \cdot B_{1,6}$$

$$FT_2 = C_{TB,1} \cdot B_{2,1} + C_{TB,2} \cdot B_{2,2} + C_{TB,3} \cdot B_{2,3} + C_{TB,4} \cdot B_{2,4} + C_{TB,5} \cdot B_{2,5} + C_{TB,6} \cdot B_{2,6}$$

$$\dots \quad (18)$$

$$FT_k = C_{TB,1} \cdot B_{k,1} + C_{TB,2} \cdot B_{k,2} + C_{TB,3} \cdot B_{k,3} + C_{TB,4} \cdot B_{k,4} + C_{TB,5} \cdot B_{k,5} + C_{TB,6} \cdot B_{k,6}$$

$$FQ_1 \cdot L_1 = C_{QLB,1} \cdot B_{1,1} + C_{QLB,2} \cdot B_{1,2} + C_{QLB,3} \cdot B_{1,3} + C_{QLB,4} \cdot B_{1,4} + C_{QLB,5} \cdot B_{1,5} + C_{QLB,6} \cdot B_{1,6}$$

$$FQ_2 \cdot L_2 = C_{QLB,1} \cdot B_{2,1} + C_{QLB,2} \cdot B_{2,2} + C_{QLB,3} \cdot B_{2,3} + C_{QLB,4} \cdot B_{2,4} + C_{QLB,5} \cdot B_{2,5} + C_{QLB,6} \cdot B_{2,6}$$

$$\dots \quad (19)$$

$$FQ_k \cdot L_k = C_{QLB,1} \cdot B_{k,1} + C_{QLB,2} \cdot B_{k,2} + C_{QLB,3} \cdot B_{k,3} + C_{QLB,4} \cdot B_{k,4} + C_{QLB,5} \cdot B_{k,5} + C_{QLB,6} \cdot B_{k,6}$$

$$FY_1 \cdot L_1 = C_{YLB,1} \cdot B_{1,1} + C_{YLB,2} \cdot B_{1,2} + C_{YLB,3} \cdot B_{1,3} + C_{YLB,4} \cdot B_{1,4} + C_{YLB,5} \cdot B_{1,5} + C_{YLB,6} \cdot B_{1,6}$$

$$FY_2 \cdot L_2 = C_{YLB,1} \cdot B_{2,1} + C_{YLB,2} \cdot B_{2,2} + C_{YLB,3} \cdot B_{2,3} + C_{YLB,4} \cdot B_{2,4} + C_{YLB,5} \cdot B_{2,5} + C_{YLB,6} \cdot B_{2,6}$$

$$\dots \quad (20)$$

$$FY_k \cdot L_k = C_{YLB,1} \cdot B_{k,1} + C_{YLB,2} \cdot B_{k,2} + C_{YLB,3} \cdot B_{k,3} + C_{YLB,4} \cdot B_{k,4} + C_{YLB,5} \cdot B_{k,5} + C_{YLB,6} \cdot B_{k,6}$$

$$FT_1 \cdot L_1 = C_{TLB,1} \cdot B_{1,1} + C_{TLB,2} \cdot B_{1,2} + C_{TLB,3} \cdot B_{1,3} + C_{TLB,4} \cdot B_{1,4} + C_{TLB,5} \cdot B_{1,5} + C_{TLB,6} \cdot B_{1,6}$$

$$FT_2 \cdot L_2 = C_{TLB,1} \cdot B_{2,1} + C_{TLB,2} \cdot B_{2,2} + C_{TLB,3} \cdot B_{2,3} + C_{TLB,4} \cdot B_{2,4} + C_{TLB,5} \cdot B_{2,5} + C_{TLB,6} \cdot B_{2,6}$$

$$\dots \quad (21)$$

$$FT_k \cdot L_k = C_{TLB,1} \cdot B_{k,1} + C_{TLB,2} \cdot B_{k,2} + C_{TLB,3} \cdot B_{k,3} + C_{TLB,4} \cdot B_{k,4} + C_{TLB,5} \cdot B_{k,5} + C_{TLB,6} \cdot B_{k,6}$$

The equations systems (16) to (21) can be solved by approximation method. Each equation in these systems corresponds to one reading variables *(FQ, FY, FT, L, $B_1$ to $B_6$)* during the measurement on the rotating wheelset. The values are read exactly when the wheel is in the calibrated position.

Because the calibration constants are within calibration during rotation determined from a bigger amount of measured data compared to static calibration and because during this type of calibration the rotating wheel is loaded with rail profile roller thus being simulated the real conditions of a wheelset rolling down the rail, this way of calibration makes the measuring system more accurate.

The system of measuring the force effect in contact between the wheel of the railway rolling stock and the rail consists of the wheel (wheelset) and the strain gauges mounted thereon, and a fixed part placed on the stationary part of the stock. The rotating part is composed of the strain gauges system, measuring amplifiers, AD converter and parts of the power and data transfer system.

The fixed part of the measuring system is composed of power and data transfer system and evaluation PC. The measured data can be transferred from the rotating part to the fixed part through contact power system or contactlessly.

The strain gauges system placed on the surface of the wheel's disc consists of several Wheatstone complete strain bridges. The strain gauges are placed on one pitch circle on one side of the wheel's disc. One strain bridge is made of four strain gauges. The placing of strain gauges on the pitch circle is characterized by these parameters:

- pitch circle diameter R

- number of strain bridges

- openness angle of the bridge $\delta$

- angular pitch of the bridges $\varphi$

- the strain gauge's angle to the radial position $\beta$

In theory it is possible to place strain gauges with any values of the above mentioned parameters. The way of distributing the strain gauges influences above all the accuracy of establishing the forces acting on the wheel. The crucial aspect is the value of the strain gauge's position angle $\beta$. The accuracy corresponding to the respective distribution of strain gauges can be determined based on calculation results of tightness of the wheel's disc using finite element method or experiment.

The arrangement of the strain gauges system is optimized for detecting the tangential force $FT$ by turning the strain gauges from the radial position by the angle $\beta = 45°$.

Based on this analysis it is possible to say that for evaluating the force $FT$ the best angle of the strain gauges position from the accuracy point of view is close to the angle's value 45°.

According to the invention, for evaluating the tangential force $FT$ the minimum number of strain bridges is 2. Here follows the description of the arrangement of the strain gauges system optimized with respect to the detection of the forces $FT$.

The strain gauges system is thus arranged that in certain positions of the wheel - its turning around the rotation axis - the strain gauges system is symmetrical about the vertical axis passing through the contact point L of the rolling stock's wheel and the rail. Distribution of deformations of the rolling stock's wheel of the forces $FQ$ and $FY$ is in consequence also symmetrical about this axis. The voltages on strain bridges which we get by subtracting the voltages of two symmetrically arranged bridges are therefore not dependent on forces $FQ$ and $FY$ but only on the force $FT$ and the position of the contact point $L$. The position of the contact point $L$ of the railway rolling stock's wheel and the rail influences the voltages, the wheel's deformations, in a much lower way then the tangential force $FT$. The loading force $FT$ is then evaluated based on an equation which we get from the equation system (9) by leaving only the components related to the force $FT$:

$$T = C_{TS,1} \cdot S_1 \qquad (22)$$

where $C_{TS,1}$ is a calibration constant and $S_1$ is voltage which we get by subtracting the symmetrically arranged strain bridges:

$$S_1 = B_1 - B_8 \qquad (23)$$

Based on what was said it is clear that the minimum number of strain bridges is in this case 2 and the number of the wheel's position in which the effects of forces $FQ, FY, FT$ are compensated is 2 within one turn of the wheel. For these positions the calibration constants are determined and in these positions the loading force $FT$ is evaluated.

For calibration of the measuring system a calibration frame was designed. In this frame the wheelset is loaded around the wheel's circumference by external forces of known values and according to these values the electrical signal of the wheelset is calibrated. Signals of vertical, transverse as well as longitudinal forces in the contact of the wheel and the rail are calibrated.

This calibration frame enables calibration of wheelsets built in the rolling stock as well as wheelsets removed from the rolling stock.

In case that an integrated wheelset is being calibrated the calibration frame is placed during calibration on the rail below the stock and supports the calibrated wheelset. The calibration frame lies on the rail on four castors which enable the frame to be inserted under the rolling stock lifted up on locomotive jacks.

The calibrated wheelset is supported by brackets holding the bearing housing.

During the calibration the rotating wheelset is loaded by the rotating rail, a wheel profile roller, successively by various levels and combinations of loads by vertical, transverse and longitudinal forces.

The mobile calibration frame consists of two mirror-symmetrical main frames which are connected together by a reduction frame.

By inserting reduction frames of various widths wheelsets of various gauges can be calibrated.

In one or both main frames there is a roller built in for loading of the wheel or both wheels of the wheelset. In case the roller is built in only in one of the main frames, in the second main frame there is a friction brake of the second wheel of the wheelset which creates the tangential force acting on the calibrated wheel.

The roller is driven by an electric motor which is placed directly onto the roller's shaft. The roller's shaft is inserted between a couple of bearing housings. Reaction of the electric motor's stator is detected by the reaction rod with force-measuring insert directly into the roller's clamping frame.

The roller's clamping frame with the drive is hung up with four vertical suspensions to the cross slide table. In the suspensions force-measuring inserts are built in for measuring of vertical force. The remaining three degrees of freedom between the roller's clamping frame and the cross slide table - the movement in longitudinal direction, movement in the transverse direction and rotation around the vertical axis - are seized by two longitudinal rods and one transverse rod. The transverse rod is equipped with force-measuring insert for measuring the transverse force.

The cross slide table is inserted into the vertical slide table with four couples of linear roller guides. The system of two linear guides consists of two linear roller guides and radial axial bearing with vertical rotation axis. Linear guides in each couple are to one another in the angle 90° so that they ensure the transverse, longitudinal and rotation movement around the vertical axis. The transverse movement and the approach angle - rotation around the vertical axis - is ensured by two transverse linear drives. The longitudinal reaction forces between the cross slide table and the vertical slide table are secured by two small rollers placed on the sides of the cross slide table.

The vertical movement of the contact point between the roller and the wheel of the wheelset is carried out by tilting of the vertical slide table around the axis placed horizontally in the outer part of the main frame. The tilting shaft is embedded in two bearing housings with spherical bearings. The tilting is ensured by vertical linear drive.

The wheel's loading is measured by six force-measuring inserts.

For measuring of the tangential force a reaction moment rod of the motor is used, on the rod a force-measuring insert is placed.

The transverse force is measured by the transverse rod on which a force-measuring insert is placed.

The vertical force is measured by four force-measuring inserts which are embedded in vertical suspensions by which the roller's frame and the drive are hung to the cross slide table.

## Outline of the figures.

The invention is further explained by the attached figures where pic.1a shows spatially the wheelset's wheel and the rail with described forces acting in the contact of the wheel and the rail, pic.lb shows the front view of the wheelset's wheel with the acting forces including the description of the transverse position of the contact point, pic.2 shows schematically the strain gauges system on the wheel with the diameter of the pitch circle, openness angle of the bridge, angular pitch of the bridges and the strain gauge's angle from the radial position, pic.3 shows schematically the strain bridges system for measuring of the tangential forces FT composed of two complete strain bridges, pic.4 schematically shows the connection of the strain gauges into the complete strain bridge, pic.5 schematically shows the overall arrangement of the system for measuring the force effect between the wheel and the rail, pic.6 shows a chart of measured responses of the strain gauges placed on the wheel in radial, tangential direction and in the angle 45° to the acting tangential force, pic.7 and pic.8 show the spatial design the rolling stock's bogie with the wheelset which has one wheel loaded by a rotating roller, pic.9 shows spatial design of the rolling stock which has one wheelset placed on the mobile calibration frame which is placed on the rail, pic.10 shows spatially the overall view of the mobile calibration frame on the rail, pic.11 shows spatially the detail of the roller's clamping frame with motor and the roller, pic.12 shows spatially the system of the cross slide table and the hanging roller's frame, pic.13 shows spatially the system of the vertical slide table in which the cross slide table is embedded with the hanging roller's clamping frame, pic.14 shows spatially the way of embedding the cross slide table into the vertical slide table in a different angle so that even the small rollers preventing the cross slide table from moving in longitudinal direction were visible, pic.16 shows spatially the detail of linear guide of the cross slide table with radial axial bearing, pic.17 shows spatially half of the calibration frame where the main frame is partly transparent so that the way of sliding of the vertical table was visible, pic.18 shows spatially the vertical slide table with the slide mechanism, pic.19 shows spatially the embedded insert measuring the tangential force, pic.20 shows spatially the embedded insert measuring the transverse force, pic.21 shows spatially the arrangement of inserts measuring the vertical force and pic.22 shows spatially from down below the mobile calibration frame on the rail where the castors, the main frame and the reduction frame are visible.

## Example version of the Invention

The measuring system of force effect in contact between the wheel of the railway rolling stock and the rail consists the wheel 13 (wheelset) with strain gauges mounted on a surface thereof, and a stationary part 14 placed on the non-rotating part of the rolling stock. The rotating part 13 consists of the wheel (wheelset) and the strain gauges system 8, low noise measuring amplifier 9 (one amplifier on one strain gauge), signal processor with a 12bit AD converter 10 and a part of the power and data transfer system 11. The fixed part of the measuring system 14 consists of power and data transfer system 11 and evaluation PC 12. The measured data are transferred by TCP/IP protocol by Ethernet, for example specifically by the so-called Powerline Ethernet through the contact power system where high frequency signal is modulated to the power voltage.

The strain gauges system 8 placed on the surface of the wheel's disc consists of several Wheatstone complete strain bridges. The strain gauges 7 are placed on one pitch circle on one side of the wheel's disc. One strain bridge is composed of four strain gauges. The distribution of strain gauges on the pitch circle is characterized by these parameters:

- pitch circle diameter $R$

- number of strain bridges

- openness angle of the bridge $\delta$

- angular pitch of the bridges $\varphi$

- the strain gauge's angle to the radial position $\beta$

In theory it is possible to place strain gauges with any values of the above mentioned parameters. The way of distributing the strain gauges influences above all the accuracy of establishing the forces acting on the wheel. The crucial aspect is the value of the strain gauge's position angle $\beta$. The accuracy corresponding to the respective distribution of strain gauges can be determined based on calculation results of tightness of the wheel's disc using finite element method or experiment.

Based on this analysis it is possible to say that for evaluating the force $FT$ the best angle of the strain gauges position from the accuracy point of view is close to the angle's value 45°.

For evaluating the tangential force $FT$ the minimum number of strain bridges is 2.

Here follows the description of the arrangement of the strain gauges system optimized regarding the detection of the forces $FT$.

The strain gauges system is thus arranged that in certain positions of the wheel - its turning around the rotation axis - the strain gauges system is symmetrical about the vertical axis passing through the contact point $L$ of the rolling stock's wheel and the rail. Distribution of deformations of the rolling stock's wheel in consequence of the forces $FQ$ and $FY$ is also symmetrical about this axis. The voltages on strain bridges which we get by subtracting the voltages of two symmetrically arranged bridges are therefore not dependent on forces $FQ$ and $FY$ but only on the force $FT$ and the position of the contact point $L$. The position of the contact point $L$ of the rolling stock's wheel and the rail influences the voltages, the wheel's deformations, in a much lower way then the tangential force $FT$. The loading force $FT$ is then evaluated based on an equation which we get from the equation system (9) by leaving only the components related to the force $FT$:

$$T = C_{TS,1} \cdot S_1 \qquad\qquad (22)$$

where $C_{TS,1}$ is a calibration constant and $S_1$ is voltage which we get by subtracting the symmetrically arranged the strain bridges:

$$S_1 = B_1 - B_8 \qquad\qquad (23)$$

Based on what was said it is clear that the minimum number of strain bridges is in this case 2 and the number of the wheel's position when the effects of forces $FQ, FY, FT$ are compensated, is 2 within one turn of the wheel. For these positions the calibration constants are determined and in these positions the loading force $FT$ is evaluated.

As a base for the calibration, equations (10) to (21) are used where only components related to the force $FT$ were left and instead of voltages on strain bridges $B$ their differences S are inserted into the equation.

For calibration of the measuring system a calibration frame 17 was designed.

In this frame 17 the wheelset 6 is loaded by external forces of known values and according to these values the electrical signal of the wheelset is calibrated. Signals of vertical, transverse as well as longitudinal forces in the contact of the wheel and the rail are calibrated.

This calibration frame 17 enables calibration of wheelset 6 built in the rolling stock 16 as well as wheelset removed from the rolling stock.

In case that a wheelset 6 integrated in the rolling stock 16 is being calibrated the calibration frame 17 is placed during calibration on the rail 2 below the stock 16 and supports the calibrated wheelset 6. The calibration frame 17 lies on the rail 2 on four castors 44 which enable the frame 17 to be inserted under the stock 16 lifted up on locomotive jacks.

The calibrated wheelset 6 is in the calibration frame 17 supported by brackets holding the bearing housing.

During the calibration the rotating wheelset 6 is loaded by the rotating rail (a roller) 15 of the wheel profile successively by various levels and combinations of loads by vertical, transverse and longitudinal forces.

The mobile calibration frame 17 consists of two mirror-symmetrical main frames 18 and 19 which are connected together by reduction frame 20.

By inserting of reduction frames 20 of various widths wheelsets 6 of various gauges can be calibrated.

In one or both main frames 18, 19, there is a roller 15 built in for loading of the wheel 5 or both wheels of the wheelset 6. In case the roller 15 is built in only in one of the main frames 18, in the second main frame 19 there is friction brake of the second wheel 4 of the wheelset which creates the tangential force acting on the calibrated wheel 3.

The roller is driven by an electric motor 21 which is placed directly onto the roller's shaft 22. The roller's shaft 22 is inserted between a couple of bearing housings 23. Reaction of the electric motor's stator 40 is detected by the reaction rod 48 with force-measuring 41 insert directly into the roller's clamping frame 24.

The roller's clamping frame 24 with the drive is hung up with four vertical suspensions 25 to the cross slide table 26. In the suspensions 25 force-measuring inserts 43 are built in for measuring of vertical force. The remaining three degrees of freedom between the roller's clamping frame 24 and the cross slide table 26 - the movement in longitudinal direction, movement in the transverse direction and rotation around the vertical axis - are seized by two longitudinal rods 27 and one transverse rod 28. The transverse rod 28 is equipped with force-measuring insert 42 for measuring the transverse force.

The cross slide table 26 is inserted into the vertical slide table 29 with four couples of linear roller guides 31. The system of two linear guides 31 consists of two linear roller guides 32 and radial axial bearing 33 with vertical rotation axis. Linear guides 32 in each couple are to one another in the angle 90° so that they ensure the transverse, longitudinal and rotation movement around the vertical axis. The transverse movement and the approach angle - turning around the vertical axis - is ensured by two transverse linear drives 30. The longitudinal reaction forces between the cross slide table 26 and the vertical slide table 29 are secured by two small rollers 34 placed on the sides of the cross slide table.

The vertical movement of the contact point between the roller 15 and the wheel 5 of the wheelset is carried out by tilting of the vertical slide table 29 around the axis placed horizontally in the outer part of the main frame 18. The tilting shaft 37 is embedded in two bearing housings 39 with spherical bearings. The tilting is ensured by vertical linear drive 30.

The wheel's 5 loading is measured by six force-measuring inserts 41, 42 and 43.

For measuring of the tangential force a reaction moment rod of the motor 48, on the rod a force-measuring insert 41 is placed.

The transverse force is measured by the transverse rod 28 on which a force-measuring insert 42 is place.

The vertical force is measured by four force-measuring inserts 43 which are embedded in vertical suspensions 25 by which the roller's clamping frame 24 hung to the cross slide table 26.

Industrial applicability

Force effects between the wheel and the rail directly influence safety of the railway rolling stock against derailment during ride and define the wheels' and rails' wearing. Knowledge of these force effects of sufficient accuracy is therefore necessary when designing new, safer railway rolling stocks with lower operating costs.

**Claims**

1. A wheel (5) or wheelset (6) of a railway rolling stock for measuring the force effect between said wheel (5) or wheelset (6) and the rail (1) during ride of the railway rolling stock, the principle of

   which consists of detecting the deformation of said wheel (5) or the wheelset (6), said wheel (5) or wheelset (6) comprising a strain gauge system (8) placed on one side of said wheel (5) or wheelset (6), on one pitch circle (R) and composed of Wheatstone complete bridges, each complete Wheatstone bridge comprising four strain gauges (7), **characterized in that** the arrangement of the strain gauge system (8) is optimized to detect tangential forces (FT), which is achieved by the rotation of all the strain gauges (7) away from the radial position by an angle $\beta = 45°$ , wherein the minimum number of the Wheatstone complete bridges arranged on the wheel (5) or wheelset (6) is two.

2. A method of calibrating the wheel or wheelset of claim 1, **characterized by** the fact that the wheel (5) or wheelset (6) rotates around its rotation axis during the calibration as it is loaded by a rotating loading roller (15) whose circumference is in contact with the wheel (5) or wheelset (6), wherein the wheel (5) or the wheelset (6) is loaded with time changing loads by the rotating loading roller (15), and wherein the load's variability is caused by the relative motion, or by acting of driving and braking torques on the rotating loading roller (15).

**Patentansprüche**

1. Das Rad (5) oder der Radsatz (6) eines Eisenbahn-Schienenfahrzeuges zur Messung der Kraftwirkung zwischen dem genannten Rad (5) oder Radsatz (6) und der Schiene (1) während der Fahrt des Eisenbahn-Schienenfahrzeuges, ein Prinzip, dass in der Erkennung der Verformung des Rades (5) oder Radsatzes (6) besteht, die Räder (5) oder Radsätze (6) enthalten das auf der einen Seite des Rades (5) oder Radsatzes (6), auf einem und aus Wheatstone-Vollbrücken aufgebauten Teilkreis (R) befindliche Dehnungsmessstreifen-System (8), wobei jede vollständige Wheatstone-Brücke vier Dehnungsmessstreifen (7) enthält, **dadurch gekennzeichnet, dass** die Anordnung des Dehnungsmessstreifen-Systems (8) zur Erkennung der Tangentialkräfe (FT ) optimiert ist, was durch die Schwenkung aller Dehnungsmessstreifen (7) von der Radialstellung hin um einen Winkel von • = 45° erreicht wird, wobei die Mindestanzahl der auf dem Rad (5) oder Radsatz angeordneten Wheatstone-Vollbrücken zwei sind.

2. Das Verfahren zur Rad- oder Radsatzkalibrierung gemäß Anspruch 1, **dadurch gekennzeichnet,dass** das Rad (5) oder der Radsatz (6) sich während der Kalibrierung um seine Drehachse dreht, wenn dieses durch die rotierende Belastungswalze (15) belastet wird, dessen Umfang im Kontakt mit dem Rad (5) oder Radsatz (6) ist, wobei das Rad (5) oder der Radsatz (6) durch die zeitveränderliche Belastung der rotierenden Belastungswalze (15) belastet wird, und wo die Veränderlichkeit der Belastung durch die relative Bewegung oder Einwirkung von Antriebs- und Bremsmomenten auf die rotierende Belastungswalze (15) bedingt ist.

**Revendications**

1. Une roue (5) ou paire de roues (6) d'un véhicule ferroviaire pour mesurer l'effet de force entre ladite roue (5) ou paire de roues (6) et le rail (1) lorsque le véhicule ferroviaire roule, principe qui consiste à détecter une déformation de la roue (5) ou paire de roues (6), les roues (5) et paires de roues (6) comportent un système (8) à jauge de contrainte situé d'un côté de la roue (5) ou paire de roues (6) sur un cercle (R) primitif et composé de ponts complets de Wheatstone, chaque pont complet de Wheatstone contenant quatre jauges de contrainte (7), **caractérisé en ce que** la disposition du système (8) àjauge de contrainte est optimisée pour détecter les forces tangentielles (FT), ce qui est obtenu en orientant toutes les jauges de contrainte (7) à partir de la position radiale d'un angle de • = 45°, le nombre minimum de ponts complets de Wheatstone disposés sur la roue (5) ou paire de roues étant deux.

2. Méthode d'étalonnage de la roue ou paire de roues selon la revendication 1 **caractérisé en ce que** la roue (5) ou paire de roues (6) tourne autour de son axe de rotation pendant l'étalonnage lorsqu'elle est chargée par un rouleau (15) de chargement en rotation dont la circonférence est en contact avec la roue (5) ou paire de roues (6), la roue (5) ou paire de roues (6) étant chargée par une charge variant dans le temps par le rouleau (15) de chargement en rotation et où la variabilité de la charge est provoquée par le mouvement relatif ou par l'action des moments d'entraînement et de freinage sur le rouleau (15) de chargement en rotation.

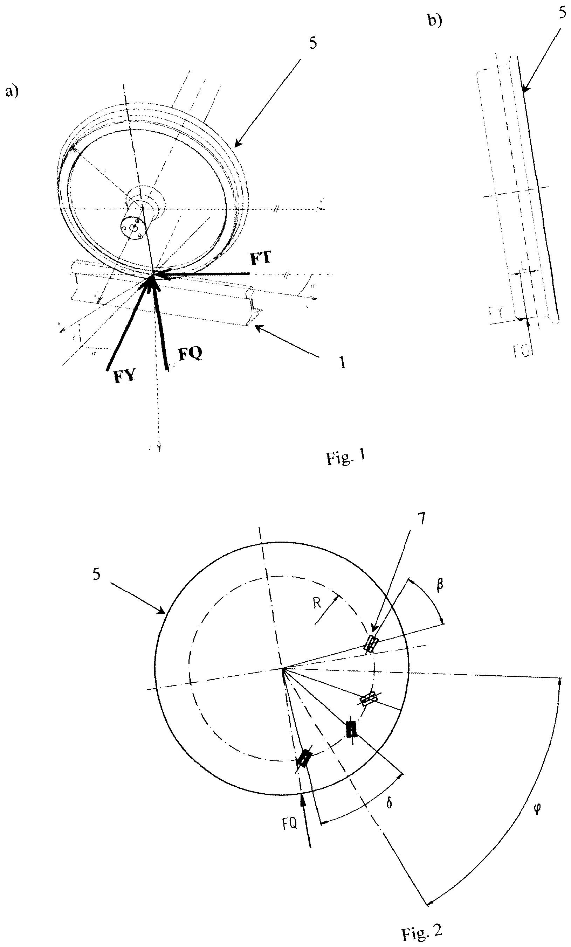

Fig. 1

Fig. 2

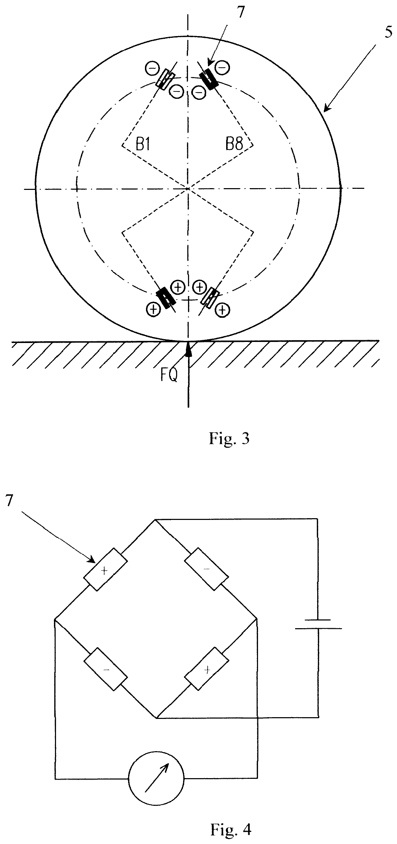

Fig. 3

Fig. 4

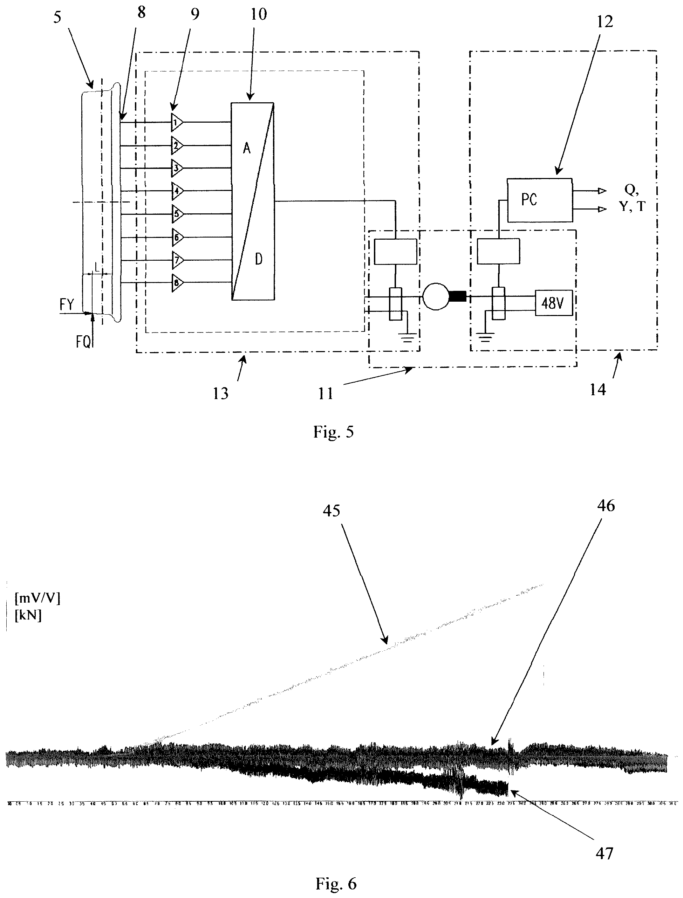

Fig. 5

[mV/V]
[kN]

Fig. 6

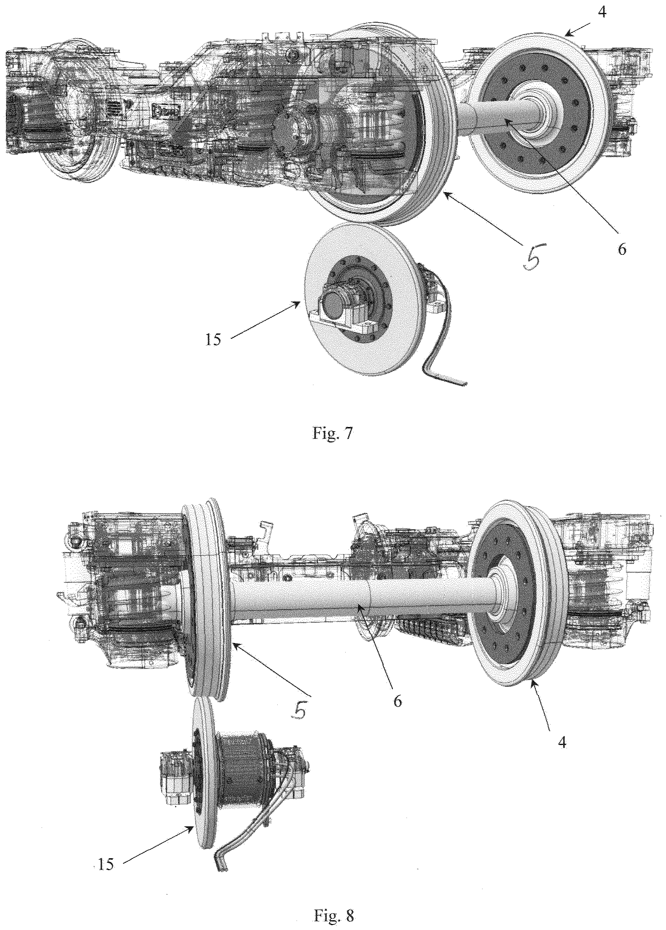

Fig. 7

Fig. 8

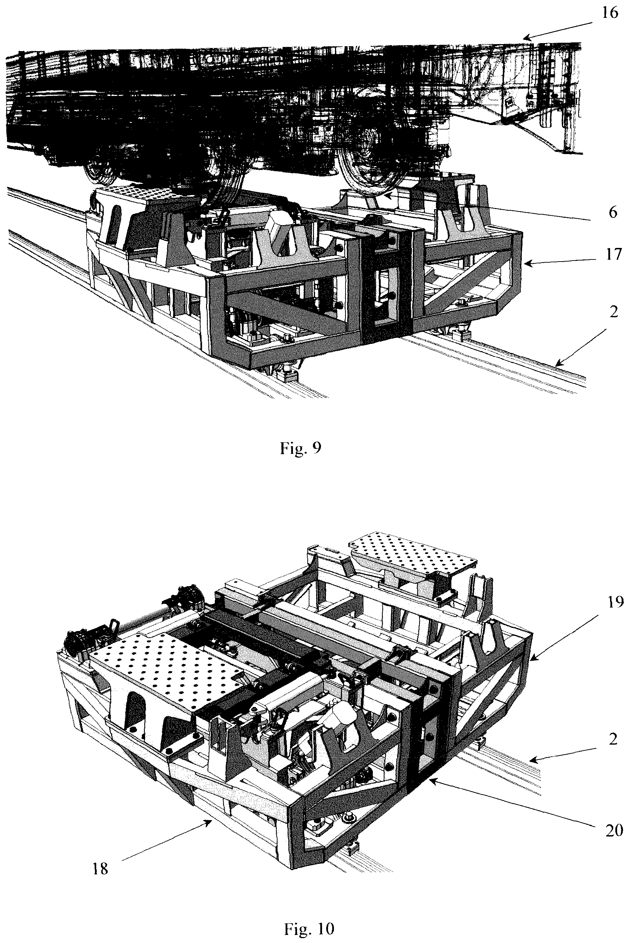

Fig. 9

Fig. 10

15

21

23

22

24

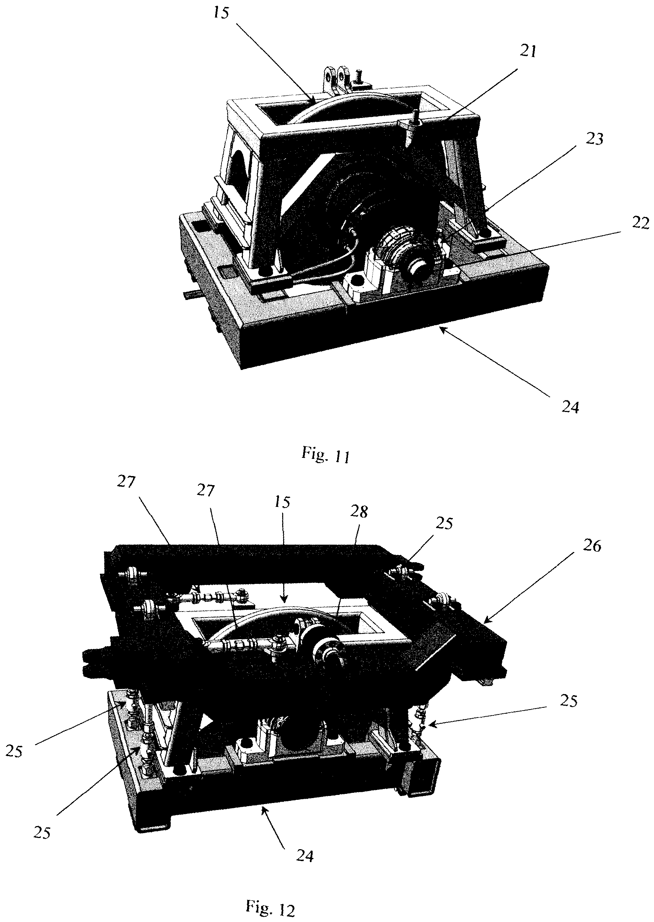

Fig. 11

27  27  15  28  25

26

25

25

25

24

Fig. 12

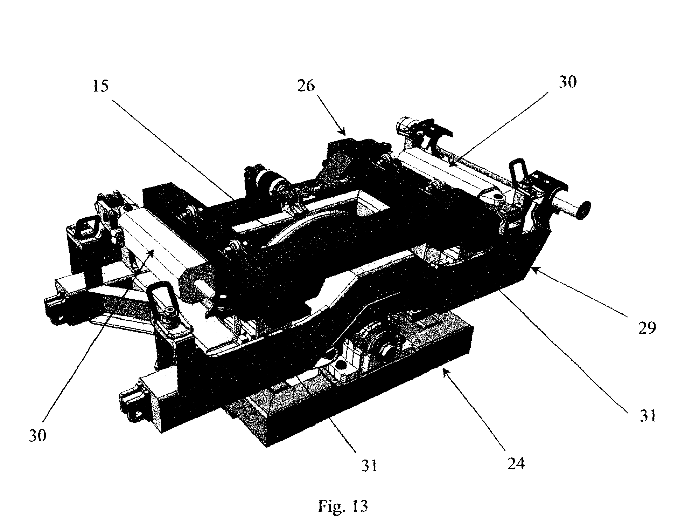

Fig. 13

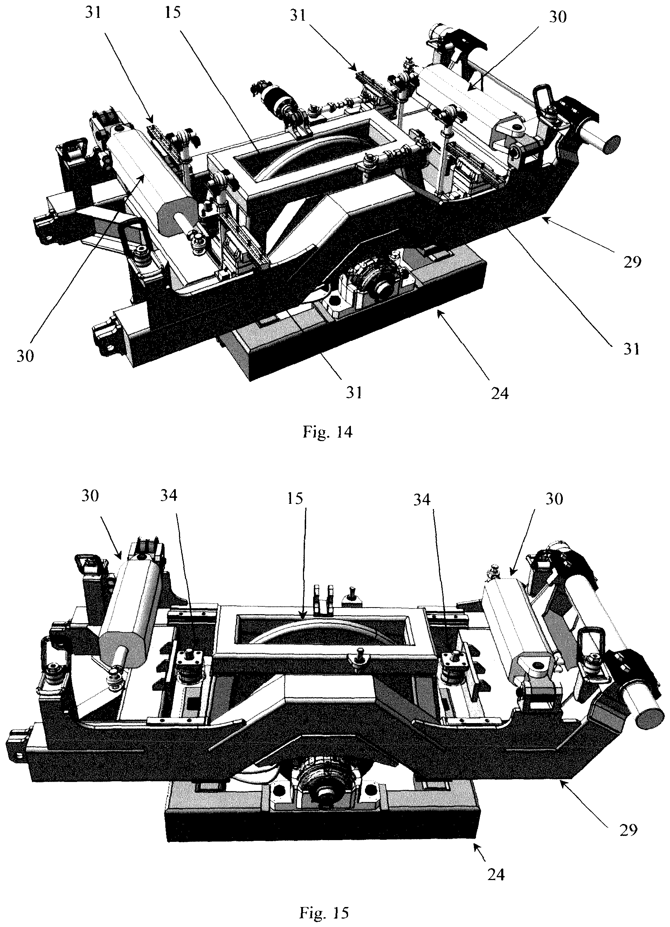

Fig. 14

Fig. 15

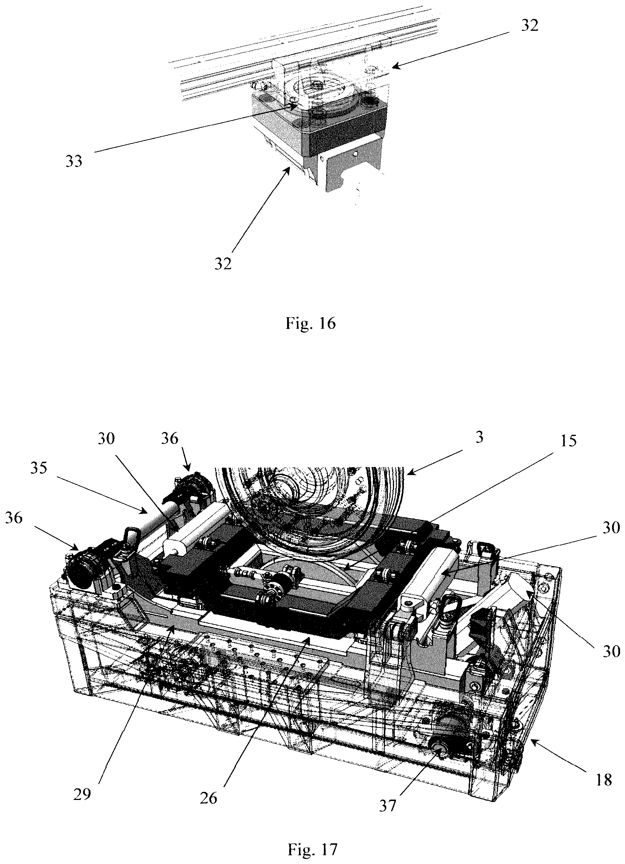

Fig. 16

Fig. 17

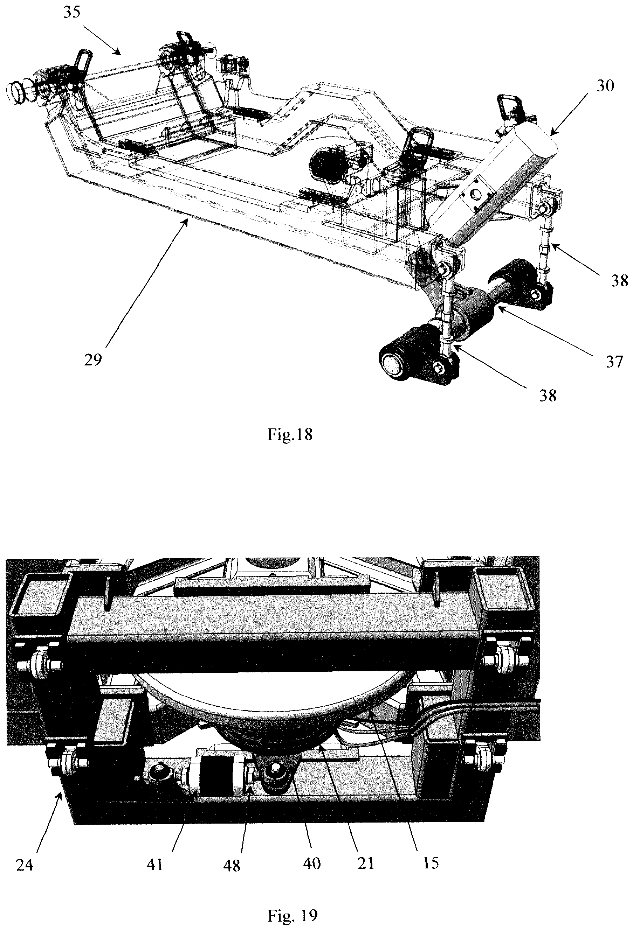

Fig.18

Fig. 19

15    24    29

42

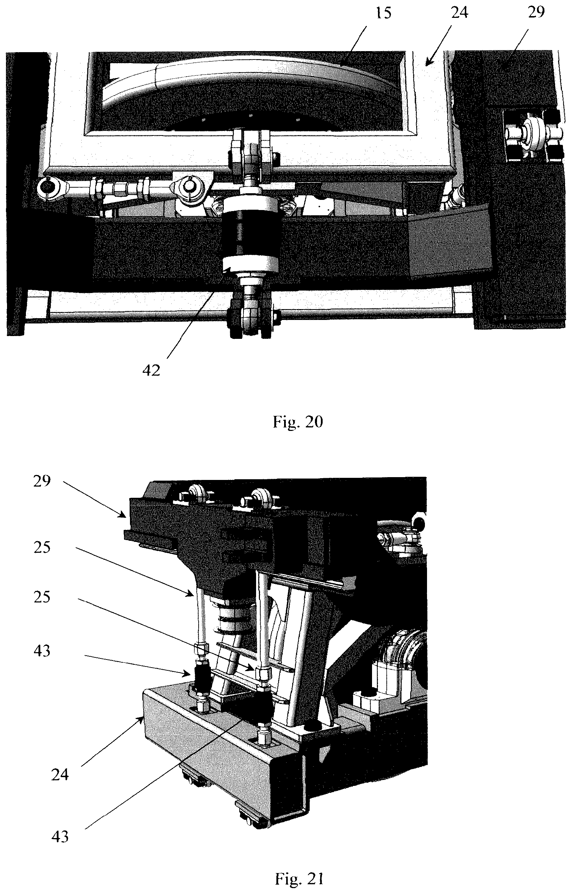

Fig. 20

29

25

25

43

24

43

Fig. 21

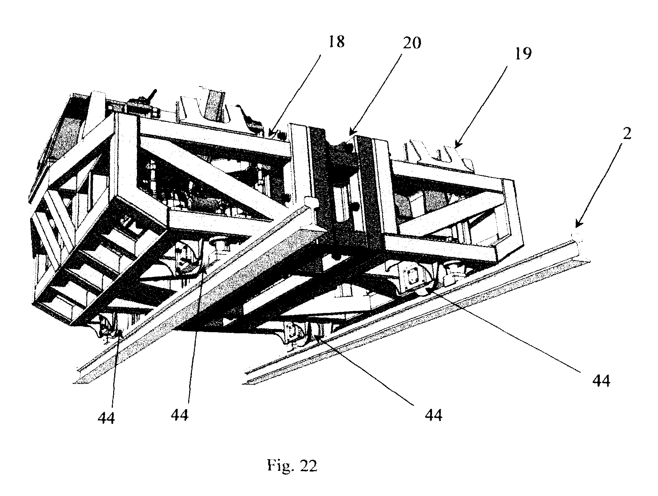

Fig. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2246681 A2
- EP 2439508 A
- EP 1886110 A
- EP 2180303 A
- EP 2181303 A
- CZ 2008657
- EP 2457800 A1
- EP 1886110 A1

**Non-patent literature cited in the description**

- **DRAGAN PETROVIC et al.** *Measuring system for the safety and safety of railway vehicles,* 2011